# EUROPÄISCHE PATENTSCHRIFT

(11) **EP 1 716 938 B1**
(45) Veröffentlichungstag und Bekanntmachung des Hinweises auf die Patenterteilung: **30.12.2009**
(21) Anmeldenummer: 06008762.4
(22) Anmeldetag: 27.04.2006
(51) Int. Cl.: B21D 28/06, B26F 1/38, F16L 23/14

(54) **Verfahren zum Herstellen von Eckwinkeln für Klimatisierungskanäle**
Method of producing corner pieces of ventilation ducts
Procédé de fabrication de pièces de coin de gaines de ventilation

(30) Priorität: 27.04.2005 DE 102005020004
(43) Veröffentlichungstag der Anmeldung: 02.11.2006
(73) Patentinhaber: Smitka, Günter, 58644 Iserlohn (DE)
(72) Erfinder: Smitka, Günter, 58644 Iserlohn (DE)
(74) Vertreter: Wenzel & Kalkoff

(56) Entgegenhaltungen:
- EP-A- 0 546 246
- GB-A- 1 559 485
- US-A- 1 639 593
- US-A- 4 572 553
- US-B1- 6 471 256

## Beschreibung

Die Erfindung betrifft ein Verfahren zum Herstellen von Eckwinkeln für Klimatisierungskanäle nach dem Oberbegriff von Anspruch 1, sowie ein Eckwinkel nach dem Oberbegriff des Anspruchs 3.

Eckwinkel dieser Art nach dem Oberbegriff von Anspruch 3 werden durch sukzessives Ausstanzen aus einem Blechstreifen hergestellt. Aus GB 1559 485 geht ein Eckwinkel der Art des Oberbegriffs von Anspruch 3 als bekannt hervor, wobei die Innenkante mit einem inneren Eckenvorsprung mit seitlichen Absätzen versehen ist.

Ein verfahren gemäss dem Oberbegriff des Anspruchs 1 ist aus US 6 471 256 bekannt.

Zur Vermeidung des bisher beim sukzessiven Ausstanzen von Eckwinkeln aus einem Blechstreifen entstehenden Verschnitts in Form eines Gitters wird erfindungsgemäß das Verfahren nach Anspruch 1 vorgesehen, Nach diesem Verfahren wird in einer ersten Arbeitsrichtung auf dem Blechstreifen fortschreitend die Innenkante eines Eckwinkels und die Außenkante des nächstfolgenden Eckwinkels mit einem gemeinsamen Trennschnitt ausgestanzt oder anderweitig z.B. durch Laserschneiden ausgeformt und dabei mit einem inneren Eckenvorsprung und außen mit einer entsprechend eingezogenen Ecke versehen. So wird mit jedem Trennschnitt ein Eckwinkel von dem Blechstreifen abgeschnitten. Hierdurch ist es möglich, den Materialeinsatz je Eckwinkel um ungefähr 40% zu reduzieren. Die Formgebung der Schenkelkanten des Eckwinkels ist beliebig, jedoch muß die Kontur der Innenkante des Eckwinkels der Kontur seiner Außenkante entsprechen, um eine verschnittfreie Herstellung zu ermöglichen. Je nach Arbeitsrichtung auf dem Blechstreifen entstehen beim Abtrennen eines Eckwinkels von dem Blechstreifen zunächst die Innenkante oder die Außenkante des als nächstem abzutrennenden Eckwinkels.

Die an der Innenkante und/oder an der Außenkante des Eckwinkels ausgebildeten Vorsprünge und Absätze dienen als Anschlag des Eckwinkels beim Einschieben desselben in ein Hohlprofil des Profilflanschrahmens. Beim Ausbilden von Vorsprüngen oder Absätzen an einer Kante des Eckwinkels sind die Konturen von aneinander angrenzenden Kanten von auf dem Blechstreifen aufeinander folgenden Eckwinkeln erfindungsgemäß gleich. Übliche Befestigungsbohrungen und/oderAuswölbungen und/oder ein vorspringender Verbindungsabschnitt an dem Eckwinkel werden entweder gleichzeitig mit dem Trennschnitt oder in einem oder mehreren nachfolgenden Bearbeitungsschritten gebildet.

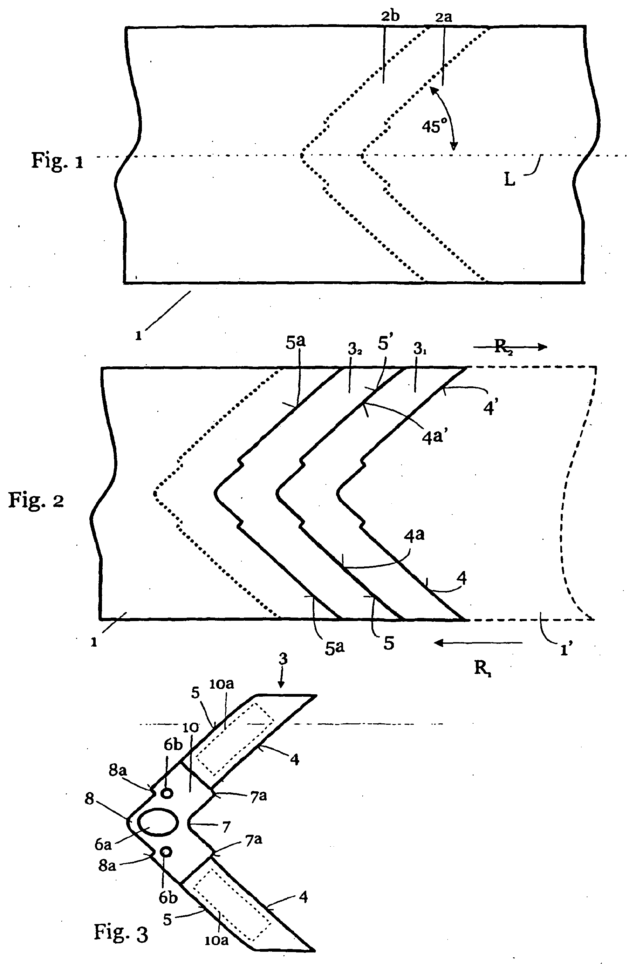

Figur 1 zeigt eine Teilansicht eines Blechstreifens 1 üblicher Dicke mit angedeuteten und unter einem Winkel von 45° zur Längsachse L des Blechstreifens 1 verlaufenden Stanzlinien 2a und 2b für die zwei Schenkel eines Ausführungsbeispiels eines Eckwinkels für Profilflanschrahmen für Klimatisierungskanäle.

Wenn man zum Herstellen der Eckwinkel 3, wie in Fig. 2 dargestellt ist, in Arbeitsrichtung R1 fortschreitend abstanzt, ist die Innenkante 4 des Eckwinkels 3₁, der abgeschnitten werden soll, wie dargestellt bereits fertig. Mit dem nächsten Trennschnitt wird der Eckwinkel 31 vom Blechstreifen 1 abgeschnitten und dabei dessen Außenkante 5 und gleichzeitig die Innenkante 4a des Eckwinkels 32 gebildet, der als nächster abgeschnitten werden soll. In Arbeitsrichtung (Vorschubrichtung) R2 fortschreitend liegt dagegen mit Bezug auf Fig. 2 rechts gestrichelt dargestellt der Blechstreifen 1' (gestrichelt dargestellt), von dem von links nach rechts fortschreitend die Eckwinkel - mit jedem Stanzhub ein Eckwinkel - abgeschnitten werden. Dabei ist die Außenkante 5a' des abzuschneidenden Eckwinkels 32 fertig, ehe er von dem Blechstreifen 1 abgeschnitten und dabei seine Innenkante 4a' und gleichzeitig die Außenkante 5' des nächstfolgenden Eckwinkels 3₁ gebildet wird.

Unabhängig von der jeweiligen Arbeitsrichtung R₁ oder R₂ schließen beide Alternativen jede Art von Innen- und Außenkontur bzw. von Außen- und Innenkanten nach Anspruch 1 ein. Entscheidend bleibt, dass aufeinanderfolgend abgeschnittene Eckwinkel in der Reihenfolge 3₁, 3₂ oder aber 3₂, 3₁ stets ohne Zwischenraum, also ohne Verschnitt, aneinander anschließen. Dies gilt ebenso für die Schenkelkanten der Eckwinkel 3 mit Absätzen bzw. Vorsprüngen wie z.B. für Eckwinkel mit Stufen wie in dem Ausführungsbeispiel nach Fig. 3.

Mit Bezug auf das Ausführungsbeispiel von Fig. 3 sind zeitgleich oder nachfolgend zum Stanzvorgang Bohrungen 6a, 6b und Auswölbungen 10a sowie der aus der Eckwinkelebene vorstehende Eckenabschnitt 10 (Verbindungsabschnitt) zeitgleich oder nachfolgend zum Stanzvorgang hergestellt. Beim Abtrennen des Eckwinkels 3 werden auf jeden Fall gleichzeitig ein innerer Eckenvorsprung 7 mit seitlichen Absätzen 7a an dem Eckenabschnitt 10, die den Endanschlag beim Einschieben des Eckwinkels 3 in das nicht dargestellte Hohlprofil des Profilflanschrahmens bilden, und ebenso an der Außenkante 5 eine eingezogene Ecke 8 mit seitlichen Absätzen 8a gebildet, deren Kontur der Kontur des inneren Eckenvorsprungs 7 entspricht.

## Patentansprüche

1. Verfahren zum Herstellen von Eckwinkeln für Klimatisierungskanäle aus aneinander gesetzten Kanalteilstücken mit Profilflanschrahmen, die über mit einem inneren Eckenvorsprung versehene Eckwinkel (3) miteinander verbunden werden, durch Ausstanzen aus einem Blechstreifen (1), wobei die Schenkel jedes Eckwinkels (3) jeweils unter einem Winkel von 45° zur Längsachse des Blechstreifens (1) verlaufen,
**dadurch gekennzeichnet, daß**
- mit jedem Trennschnitt (2a, 2b) ein Eckwinkel (3) derart von dem Blechstreifen (1) abgeschnitten wird, daß
- mit diesem Trennschnitt
- entweder, nämlich in einer ersten Arbeitsrichtung (R₁) auf dem Blechstreifen (1) fortschreitend, die Außenkante (5) dieses Eckwinkels (3₁) und gleichzeitig die Innenkante (4a) desjenigen Eckwinkels (3₂) gebildet wird, der als nächster Eckwinkel (3₂) von dem Blechstreifen (1) abgeschnitten wird,
- oder, nämlich in einer zweiten zur ersten entgegengesetzten Arbeitsrichtung (R₂) auf dem Blechstreifen (1') fortschreitend, die Innenkante (4a') dieses Eckwinkels (3₂) und gleichzeitig die Außenkante (5') desjenigen Eckwinkels (3₁) gebildet wird, der als nächster Eckwinkel (3₁) von dem Blechstreifen (1') abgeschnitten wird,
- wobei jeweils die Innenkante (4) mit einem inneren Eckenvorsprung (7) mit seitlichen Absätzen (7a) versehen wird, dessen Kontur mit der an der Außenkante (5) des Eckwinkels (3) eingezogenen Ecke (8) mit seitlichen Absätzen (8a) übereinstimmt.

2. Verfahren zum Herstellen von Eckwinkeln nach Anspruch 1, **dadurch gekennzeichnet, daß** mindestens eine Befestigungsbohrung (6) und/oder Auswölbung (10a) an den Schenkeln und/oder ein aus der Ebene des Eckwinkels (3) vorstehender Verbindungsabschnitt (10) an dem Eckwinkel (3) gebildet wird.

3. Eckwinkel für Klimatisierungskanäle aus aneinander gesetzten Kanalteilstücken mit Profilflanschrahmen, die über Eckwinkel (3) miteinander verbunden werden, **dadurch gekennzeichnet, daß** die Konturen der Außenkante (5) und der Innenkante (4) des Eckwinkels (3) gleich sind, wobei jeweils die Innenkante (4) mit einem inneren Eckenvorsprung (7) mit seitlichen Absätzen (7a) versehen ist dessen Kontur mit einer an der Außenkante (5) des Eckwinkels (3) eingezogenen Ecke (8) mit seitlichen Absätzen (8a) übereinstimmt.

## Claims

1. Method for producing corner angles for air conditioning ducts made of abutting duct sections with profile flange frames which are connected with each other with corner angles (3) provided with an inner corner projection by punching out of a sheet metal strip (1), whereby the legs of each corner angle (3) respectively form an angle of 45° with the longitudinal axis of the sheet metal strip (1),
**characterized in that**
- a corner angle (3) is cut off from the sheet metal strip (1) with each separating cut (2a, 2b) in such a manner that
- with this separating cut
- either, namely advancing in a first working direction (R₁) on the sheet metal strip (1), the outer edge (5) of this corner angle (3₁) is formed and simultaneously the inner edge (4a) of the corner angle (3₂) which is cut off as next corner angle (3₂) from the sheet metal strip (1)
- or, namely advancing in a second working direction (R₂) opposed to the first one on the sheet metal strip (1'), the inner edge (4a') of this corner angle (3₂) is formed and simultaneously the outer edge (5') of the corner angle (3₁) which is cut off as next corner angle (3₁) from the sheet metal strip (1')
- whereby the inner edge (4) is respectively provided with an inner corner projection (7) with lateral shoulders (7a), the contour of which coincides with the corner (8) with lateral shoulders (8a) which is reduced on the outer edge (5) of the corner angle (3).

2. Method for producing corner angles according to claim 1, **characterized in that** at least one fixing bore (6) and/or a vault (10a) is formed on the legs and/or a junction section (10) projecting from the surface plane of the corner angle (3) is formed on the corner angle (3).

3. Corner angle for air conditioning ducts made of abutting duct sections with profile flange frames which are connected with each other with corner angles (3), **characterized in that** the contours of the outer edge (5) and of the inner edge (4) of the corner angle (3) are alike, whereby the inner edge (4) is respectively provided with an inner corner projection (7) with lateral shoulders (7a), the contour of which coincides with a corner (8) with lateral shoulders (8a) which is reduced on the outer edge (5) of the corner angle (3).

## Revendications

1. Procédé pour fabriquer des cornières d'angle pour voies de climatisation, constituées par des tronçons de voie mis bout à bout avec des cadres de bride à profil qui sont reliés les uns aux autres par des cornières d'angle (3) pourvues d'une saillie de coin intérieur, par découpage dans une bande de tôle (1), les montants de chaque cornière d'angle (3) formant respectivement un angle de 45° avec l'axe longitudinal de la bande de tôle (1),
**caractérisé en ce**
- **qu'**une cornière d'angle (3) est séparée de la bande de tôle (1) avec chaque coupe de séparation (2a, 2b) de telle manière que
- avec cette coupe de séparation
- il est formé, à savoir en avançant sur la bande de tôle (1) dans un premier sens de travail (R₁), soit l'arête extérieure (5) de cette cornière d'angle (3₁) et simultanément l'arête intérieure (4a) de la cornière d'angle (3₂) qui est séparée comme prochaine cornière d'angle (3₂) de la bande de tôle (1)
- soit il est formé, à savoir en avançant sur la bande de tôle (1') dans un second sens de travail (R₂) opposé au premier, l'arête intérieure (4a') de cette cornière d'angle (3₂) et simultanément l'arête extérieure (5') de la cornière d'angle (3₁) qui est séparée comme prochaine cornière d'angle (3₁) de la bande de tôle (1'),
- l'arête intérieure (4) étant pourvue respectivement d'une saillie de coin intérieur (7) avec des épaulements latéraux (7a), saillie de coin dont les contours coïncident avec le coin (8) avec des épaulements latéraux (8a) qui est rentré sur l'arête extérieure (5) de la cornière d'angle (3).

2. Procédé pour fabriquer des cornières d'angle selon la revendication 1, **caractérisé en ce qu'**au moins une forure de fixation (6) et/ou une voussure (10a) est formée sur les montants et/ou une section de liaison (10) qui fait saillie du plan de la cornière d'angle (3) est formée sur la cornière d'angle (3).

3. Cornière d'angle pour voies de climatisation constituées par des tronçons de voie mis bout à bout avec des cadres de bride à profil qui sont reliés les uns aux autres par des cornières d'angle (3), **caractérisée en ce que** les contours de l'arête extérieure (5) et de l'arête intérieure (4) de la cornière d'angle (3) sont les mêmes, l'arête intérieure (4) étant pourvue respectivement d'une saillie de coin intérieure (7) avec des épaulements latéraux (7a), saillie de coin dont les contours coïncident avec un coin (8) avec des épaulements latéraux (8a) qui est rentré sur l'arête extérieure (5) de la cornière d'angle (3).
